# EUROPEAN PATENT APPLICATION

(11) **EP 1 806 943 A2**
(43) Date of publication of application: **11.07.2007**
(21) Application number: 07000125.0
(22) Date of filing: 04.01.2007
(51) Int. Cl.: H04Q 7/38

(54) **Method and apparatus of modifying integrity protection configuration in a mobile user equipment of a wireless communications system**

(30) Priority: 04.01.2006 US 766247 P
(71) Applicant: Innovative Sonic Limited, Tortola (VG)
(72) Inventor: Jiang, Sam Shiaw-Shiang, Taipei City (TW)
(74) Representative: Weber, Joachim

(57) **Abstract**

A method of modifying Integrity Protection Configuration in a user end of a communications system starts with receiving a first Radio Resource Control (RRC) message through a first Signaling Radio Bearer (SRB) on downlink for modifying the Integrity Protection Configuration. Activation Time of a second SRB on uplink is set to at least VT(RRC SN) + 2. The Activation Time of the second SRB on uplink is attached to a second RRC message utilized for indicating completion of modifying the Integrity Protection Configuration. The second RRC message is outputted to a network end of the communications system through the first SRB on uplink. Finally, a third RRC message having a sequence number equal to the Activation Time is outputted through the second SRB on uplink after receiving an acknowledgement message indicating that the network end successfully received the second RRC message.

## Description

This application claims the benefit of the filing date of U.S. Provisional Patent Application No. 60/766,247, filed on Jan. 4, 2006, the contents of which are hereby incorporated by reference.

The present invention relates to a method of modifying Integrity Protection Configurations in mobile communications systems and related communications device according to the pre-characterizing clauses of claims 1 and 2.

Through use of Signaling Radio Bearers (SRB), Radio Resource Control (RRC) layers of a user end and a network end can exchange RRC messages, as a basis for radio resource settings, and for completing various RRC control processes. In the prior art, RRC procedures can be categorized by function as RRC Connection Management Procedures, Radio Bearer (RB) Control Procedures, RRC Connection Mobility Procedures, and Measurement Procedures. RRC Connection Management Procedures are primarily for establishing, maintaining, and managing the signaling link between the user end and the network end, and include a Security Mode Control Procedure, which is used for performing encryption and integrity protection actions to secure data transmission.

The primary goal of the Security Mode Control Procedure is turning on, or modifying configuration of, encryption of SRBs for a control plane and RBs for a user plane, and can also be used to turn on, or modify configuration of, an Integrity Protection procedure for the SRBs. The concept of Integrity Protection is similar to an electronic signature. Every time the user end or the network end transmits a signaling message, the user end or the network end will add the electronic signature, whose content is different for each signaling message. A legal user end or network end can use an Integrity Key to authenticate the accuracy of the electronic signature, and thereby decide whether or not to accept the received signaling message and perform the actions indicated in the signaling message.

When executing Integrity Protection, COUNT-I is a very important input parameter of an f9 algorithm. Every COUNT-I is formed of a 28-bit RRC Hyper Frame Number (RRC-HFN) and a 4-bit RRC Sequence Number (RRC-SN), for a total of 32 bits. The RRC-SN corresponds to an RRC Protocol Data Unit (PDU), using a cycle of 0-15, increasing sequentially. When a new cycle starts, i.e. from 15 back to 0, the RRC-HFN is increased by 1. After Integrity Protection is started, the user end should add 1 to the RRC-SNs of every newly transmitted or retransmitted Uplink RRC message on each SRB. When the Uplink RRC-SN is equal to 0, the RRC-HFN is increased by 1. In addition, when the IP Command is in Modify Integrity Protection Configuration mode, and the Uplink RRC-SN of SRB0 is increased by N302+2, the sequencing method described above still works. Namely, if the Uplink RRC-SN of SRB0 is equal to 0 after adding N302+2, the RRC-HFN is increased by 1. Thus, after the Activation Time of the SRB0 on uplink is set to 0, if the RRC-SN of the first RRC message transmitted on SRB0 is 0, the RRC-HFN will be increased by 1. If the RRC-SN is not 0, then the RRC-HFN will not be increased by 1. In this situation, if after the modify IP parameter settings process, the first RRC message transmitted on SRB0 is lost (for example, due to radio transmission obstructions), the prior art will experience a loss of transmission efficiency, possibly even discarding RRC messages unnecessarily.

This in mind, the present invention aims at providing a method of modifying Integrity Protection Configurations in mobile communications systems and related communications device that prevents unnecessary discarding of RRC messages, thereby increasing the efficiency of use of system resources.

This is achieved by a method of modifying Integrity Protection Configurations in mobile communications systems and related communications device according to claims 1 and 2. The dependent claims pertain to corresponding further developments and improvements.

As will be seen more clearly from the detailed description following below, the claimed method of modifying Integrity Protection Configurations in mobile communications systems and related communications device includes outputting a third RRC message having a sequence number equal to the Activation Time through the second SRB on uplink after receiving an acknowledgement message indicating that the network end successfully received the second RRC message.

In the following, the invention is further illustrated by way of example, taking reference to the accompanying drawings. Thereof
Fig. 1 is a functional block diagram of a communications device,
Fig. 2 is a diagram of program code in Fig. 1, and
Fig. 3 is a flow chart of the present invention method.

The third generation (3G) mobile communications system has adopted a Wideband Code Division Multiple Access (WCDMA) wireless air interface access method for a cellular network. WCDMA can provide high frequency spectrum utilization, universal coverage, and high quality, high speed multimedia data transmission. The WCDMA method also meets all kinds of QoS requirements simultaneously, providing diverse flexible two-way transmission services and better communication quality to reduce transmission interruption rates.

For the universal mobile telecommunications system (UMTS), the 3G communications system comprises User Equipment (UE), the UMTS Terrestrial Radio Access Network (UTRAN), and the Core Network (CN). Communications protocols utilized include Access Stratum (AS) and Non-Access Stratum (NAS). AS comprises various sub-layers for different functions, including Radio Resource Control (RRC), Radio Link Control (RLC), Media Access Control (MAC), Packet Data Convergence Protocol (PDCP), and Broadcast/Multicast Control (BMC). The sub-layers mentioned, and their operating principles, are well known in the art, and detailed description thereof is omitted. RRC is a Layer 3 communications protocol, and is the core of the AS communications protocol. All radio resource information exchange, radio resource configuration control, QoS control, channel transmission format configuration control, packet segmentation/concatenation processing and control, and NAS protocol transmission processing is performed by the RRC layer.

The RRC layer is located in the Radio Network Controller (RNC) of the UTRAN and the UE, and is primarily used to manage and maintain packet switching and sequencing of a Uu Interface. The RRC layer performs radio resource control in the following manner. After the RRC of the UE obtains various measurement results from the MAC and the Physical Layer, the RRC generates a Measurement Report from the various measurement results. After processing by the RLC, the MAC, and the Physical Layer, the Measurement Report is sent to the RRC of a network end, e.g. UTRAN. After a Radio Resource Assignment message sent from the RRC of the network end is received, the RRC of the user end can perform lower layer control and setting based on a result of resolving the message, e.g. setting the operation mode, packet length, and encryption method of the RLC layer, setting the channel multiplexing mapping method and channel transmission format of the MAC, and setting the operating frequency, spreading code, transmission power, synchronization method, and measurement items of the Physical Layer.

Between the user end and the network end, the RRC layer uses RRC Messages, also known as signaling, to exchange information. RRC Messages are formed from many Information Elements (IE) used for embedding necessary information for setting, changing, or releasing protocol entities of Layer 2 (RLC, MAC) and Layer 1 (Physical Layer), thereby establishing, adjusting, or canceling information exchange channels to perform data packet transportation. Through RRC Messages, the RRC layer can embed control signals needed by an upper layer in the RRC Message, which can be sent between the NAS of the user end and the CN through the radio interface to complete the required procedures.

From the standpoint of the RRC, all logical data communication exchange channels, be they for providing data transmission exchange to the user or for providing RRC layer control signal transmission exchange, are defined in the context of a Radio Bearer (RB). In the user end, the RB comprises one unidirectional or a pair of uplink/downlink logic data transmission exchange channels. In the network end, the RB comprises one unidirectional or a pair of uplink/downlink logic data transmission exchange channels.

According to different usage goals, the RB can be divided into different categories, wherein the RB specifically used for transmitting RRC signals is generally called a Signaling Radio Bearer (SRB), which includes:
1. SRB0: Uplink (UL) uses Transparent Mode (TM) transmission, Downlink (DL) uses Unacknowledged Mode (UM) transmission, and data is exchanged through a Common Control Channel.
2. SRB1: The UL and DL both use UM transmission, and data is exchanged through a Dedicated Control Channel.
3. SRB2: The UL and DL both use Acknowledged Mode (AM) transmission, and data is exchanged through a Dedicated Control Channel.
4. SRB3: The same as SRB2, but the content of the data transmitted is specifically for the upper layer of the RRC protocol with higher priority.
5. SRB4: The same as SRB3, but the data transmitted is for the upper layer of the RRC protocol with lower priority.

Through use of the SRBs, the RRC layers of the user end and the network end can exchange RRC messages, as a basis for radio resource settings, and for completing various RRC control processes. In the prior art, RRC procedures can be categorized by function as RRC Connection Management Procedures, RB Control Procedures, RRC Connection Mobility Procedures, and Measurement Procedures. RRC Connection Management Procedures are primarily for establishing, maintaining, and managing the signaling link between the user end and the network end, and include a Security Mode Control Procedure, which is used for performing encryption and integrity protection actions to secure data transmission.

The primary goal of the Security Mode Control Procedure is turning on, or modifying configuration of, encryption of SRBs for control plane and RBs for user plane, and can also be used to turn on, or modify configuration of, an Integrity Protection procedure for the SRBs. The concept of Integrity Protection is similar to an electronic signature. Every time the user end or the network end transmits signaling message, the user end or the network end will add the electronic signature, whose content is different for each signaling message. A legal user end or network end can use an Integrity Key to authenticate the accuracy of the electronic signature, and thereby decide whether or not to accept the received signaling message and perform the actions indicated in the signaling message.

The Integrity Protection procedure is primarily used for protecting all SRBs, to prevent fake signaling from unrelated parties from compromising security, and calculates information required for providing Integrity Protection, such as the electronic signature mentioned above, based on a UMTS Integrity Algorithm (UIA). The UIA uses the following five parameters in an f9 algorithm to calculate a Message Authentication Code for data Integrity (MAC-I). The five parameters are defined and described in detail in the RRC Communications Protocol Standard (3GPP TS 25.331 V.6.7.0) set forth by the 3^{rd} Generation Partnership Project (3GPP). Briefly, the five parameters are:
1. Integrity Key (IK): Generated by the user end or the network end, and 128 bits long.
2. Integrity Sequence Number (COUNT-I): Each SRB includes an uplink COUNT-I and a downlink COUNT-I. Each COUNT-I is formed of a 28-bit RRC Hyper Frame Number (RRC-HFN) and a 4-bit RRC Sequence Number (SN), for a total of 32 bits.
3. Network-Side Nonce (FRESH): Generated by the network end, with a length of 32 bits.
4. Direction Identifier (DIRECTION): Utilized for indicating uplink or downlink transmission, with a length of 1 bit.
5. Signaling Message (MESSAGE).

The UTMS Integrity Algorithm can be expressed as:
MAC-I=f9(IK, COUNT-I, FRESH, DIRECTION, MESSAGE).

Operation of the Integrity Protection (IP) procedure starts with the user end and the network end each storing or maintaining the same RRC-HFN and FRESH values. Then, the network end calculates a message access code for data integrity (MAC-I) through the UIA based on the content and sequence number RRC-SN of an RRC message of a Security Mode Command comprising Integrity Protection parameter settings. The network end sends the Security Mode Command RRC message and the MAC-I (called the IP Command or the IP Command message hereinafter) through an SRB to the user end. After the user end receives the IP command, the user end calculates a new MAC-I through the UIA, and compares the new MAC-I with the MAC-I received from the network end. If they are the same, Downlink IP is activated, and another MAC-I is calculated based on content of a Security Mode Complete RRC message and the Uplink RRC-SN. The Security Mode Complete RRC message and the MAC-I (called the IP Complete message hereinafter) are sent back to the network end. After the network end receives the IP Complete message, another MAC-I is calculated from the Uplink RRC -SN, and compared with the MAC-I received. If they are the same, Uplink IP is activated.

Simply speaking, in the IP procedure, the user end calculates a new MAC-I based on the IP Command outputted by the network end, and compares the new MAC-I to the MAC-I (in the IP Command) outputted by the network end. If they are the same, Downlink IP is activated in the user end, and an IP Complete message is sent back to the network end. Then, the network end calculates a MAC-I based on the IP Complete message received from the user end, and compares the MAC-I with the MAC-I (in the IP Complete message) received from the user end. If they are the same, Uplink IP is activated in the network end.

The IP Command message comprises two modes of operation, including Start Integrity Protection and Modify Integrity Protection. As implied by their names, Start Integrity Protection utilizes the IP Command message to activate Integrity Protection when the SRB has not yet activated IP; and, Modify Integrity Protection changes IP configuration after the SRB has activated Integrity Protection.

According to the RRC Communications Protocol Standard 3GPP TS 25.331 V6.7.0 mentioned above, when the user end receives the IP Command, the user end immediately uses the new IP settings on the Uplink SRB2. If the IP Command message is in Start Integrity Protection mode, the user end will activate Integrity Protection on the Uplink SRB2, and respond with the IP Complete message. And, the user end will not prohibit transmission of messages on SRBs other than SRB2. On the other hand, if the IP Command is in Modify Integrity Protection mode, it can be seen from page 277, lines 38-41 of the above-mentioned specification that the Activation Time of the SRB0 on uplink activating and using the new Integrity Protection configuration is greater than or equal to VT(RRC SN) + N302 + 2. The variable VT(RRC SN) represents the RRC sequence number of the last RRC message transmitted by the SRB0 on uplink. The parameter N302, which is sent to the user end from the network end by system broadcast, represents the maximum number of times for retransmitting CELL UPDATE and URA UPDATE (UTRAN Registration Area UPDATE) messages. The parameter N302 ranges from 0 to 7, and its default value is 3. The messages CELL UPDATE and URA UPDATE comprise the cause of requesting cell update and URA update respectively, and details thereof can be found in sections 8. 3. 1 and 8. 3. 2 of the above-mentioned specification. In another aspect, page 277, line 42 to page 278, line 2 of the above-mentioned specification explains that, after receiving the IP Command message, the user end will prohibit transmission of RRC messages having RRC sequence numbers greater than the Activation Time on SRBs other than SRB2. Page 105, line 8 to page 106, line 7 of the above-mentioned specification explains that, once the user end gets an acknowledgement confirming that the network end has already received the IP Complete message, the user end will cancel prohibition of transmission, and allow transmission on all SRBs. Page 106, lines 8-10 of the above-mentioned specification explain that, for the SRB0 on uplink, the VT(RRC SN) is set to a value, so as to allow RRC messages transmitted through the SRB0 on uplink to use the new IP configuration. Simultaneously, the user end also begins using the new. IP configuration on all SRBs other than SRB2.

Thus, in the prior art, after the user end gets an acknowledgement confirming that the network end has already successfully received the IP Complete message, the user end can use SRB0 to transmit any RRC message with an RRC-SN greater than or equal to the Activation Time, so as to ensure that the user end can use the new IP configuration as soon as possible.

Also, when executing Integrity Protection, COUNT-I is a very important input parameter of the f9 algorithm. As mentioned above, every COUNT-I is formed of a 28-bit RRC-HFN and a 4-bit RRC-SN, for a total of 32 bits. The RRC-SN corresponds to an RRC PDU, using a cycle of 0-15, increasing sequentially. When a new cycle starts, i.e. from 15 back to 0, the RRC-HFN is increased by 1. The related operation of RRC-HFN is disclosed in the above-mentioned specification on pages 248-249. As described, after Integrity Protection is started, the user end should add 1 to the RRC-SNs of every newly transmitted or retransmitted Uplink RRC message on each SRB. When the Uplink RRC-SN is equal to 0, the RRC-HFN is increased by 1. In addition, when the IP Command is in Modify Integrity Protection Configuration mode, and the Uplink RRC-SN of SRB0 is increased by N302+2, the sequencing method described above still works. Namely, if the Uplink RRC-SN of SRB0 is equal to 0 after adding N302+2, the RRC-HFN is increased by 1.

Thus, after the Activation Time of the SRB0 on uplink is set to 0, if the RRC-SN of the first RRC message transmitted on SRB0 is 0, the RRC-HFN will be increased by 1. If the RRC-SN is not 0, then the RRC-HFN will not be increased by 1.

In this situation, if after the modify IP parameter settings process, the first RRC message transmitted on SRB0 is lost (for example, due to radio transmission obstructions), the prior art will experience a loss of transmission efficiency, possibly even discarding RRC messages unnecessarily. Two examples of this follow.

Example 1: Assume the parameter N302 is set to 3 by the network end, and the corresponding uplink SRB0 variable VT (RRC SN) is set to 11 before the Modify Integrity Protection process is completed. According to the prior art, the Activation Time of the SRB0 Uplink is equal to VT(RRC SN) + N302 + 2 = 11 + 3 + 2 = 16. Because the RRC-SN is a 4-bit number, it can be seen that the Activation Time of the uplink SRB0 becomes 0 (16 mod 2⁴) Simultaneously, the user end will attach information indicating that the Activation Time for the SRB0 Uplink is 0 in the IP Complete message sent to the network end, expressing that the user end will begin using new IP configuration on and after the Activation Time of 0 of the SRB0 on uplink. After the user end has gotten an acknowledgement confirming that the network end received the IP Complete message successfully, according to the prior art, the user end can transmit messages having RRC-SN greater than or equal to the Activation Time, e.g. RRC-SN = 10, through SRB0 on uplink. If the message having RRC-SN = 10 is lost in transmission, the user end can retransmit the RRC message, and increase the RRC-SN by 1 to RRC-SN = 11. If the RRC message having RRC-SN = 11 is lost again during retransmission, because N302 = 3, the user end will retransmit the RRC message again, and increase the RRC-SN by 1 again to RRC-SN = 12. At this time, assume the network end successfully receives the RRC message with RRC-SN = 12. Thus, the RRC message is the first RRC message received by the network end on uplink SRB0 after receiving the IP Complete message, and the RRC-SN is 12 (the network end sees 11 as the value corresponding to the uplink SRB0 variable VT(RRC SN) before the Modify Integrity Protection Configuration process is completed). Therefore, the prior art will see RRC-SN = 12 as being before the Activation Time of 0 (based on the sequence), and will use the old Integrity Protection configuration, i.e. the Integrity Protection parameters used prior to completion of the Modify Integrity Protection Configuration process, to perform the integrity check. Of course, the RRC message will be unable to pass the integrity check, and will be discarded by the network end. Likewise, the network end will also discard RRC messages with RRC-SN = 13-15 received through SRB0. In this situation, because the Integrity Protection configurations of the network end and the user end are not synchronized, the RRC procedure corresponding to the RRC messages having RRC-SN = 12-15 will be delayed, thus affecting system efficiency.

Example 2: Assume the parameter N302 is set to 3 by the network end, and the variable VT (RRC SN) corresponding to the uplink SRB0 is 11 before the Modify Integrity Protection Configuration process is completed. According to the prior art, the Activation Time of the SRB0 Uplink is equal to VT (RRC SN) + N302 + 2 = 11 + 3 + 2 = 16. Because the RRC-SN is a 4-bit number, it can be seen that the Activation Time of the uplink SRB0 becomes 0 (16 mod 2⁴). Simultaneously, the user end will attach information indicating that the Activation Time for the uplink SRB0 is 0 in the IP Complete message sent to the network end, expressing that the user end will begin using new IP configuration on and after the Activation Time of 0 of the SRB0 Uplink. After the user end has received an acknowledgement confirming that the network end received the IP Complete message successfully, according to the prior art, the user end can transmit messages having RRC-SN greater than or equal to the Activation Time through SRB0 to use the new Integrity Protection settings. In this situation, the user end can use the following two methods to send an RRC message using the new Integrity Protection configuration through uplink SRB0. Method 1: The user end sets the RRC-SN of the RRC message to 0, and increases the RRC-HFN from x to x+1. If transmission fails, the user end retransmits the RRC message, sets the RRC-SN to 1, and sets the RRC-HFN to x+1. Method 2: The user end sets the RRC-SN.of the RRC message to 1, but keeps the RRC-HFN at x. In other words, when using Method 1 to retransmit the RRC message, the RRC-SN = 1, and the RRC-HFN = x+1. When using Method 2 to transmit the RRC message, the RRC-SN = 1, and the RRC-HFN = x. Thus, the network end must determine if the user end is transmitting the RRC message by Method 1 or by Method 2 in order to decide the value of RRC-HFN, and thereby perform the integrity check on the RRC message. However, in the prior art, the network end is unable to determine which method the user end used to transmit the RRC message, which makes it difficult to perform the integrity check correctly, and also makes it impossible to synchronize the RRC-HFN of the network end and the user end, which affects system operation.

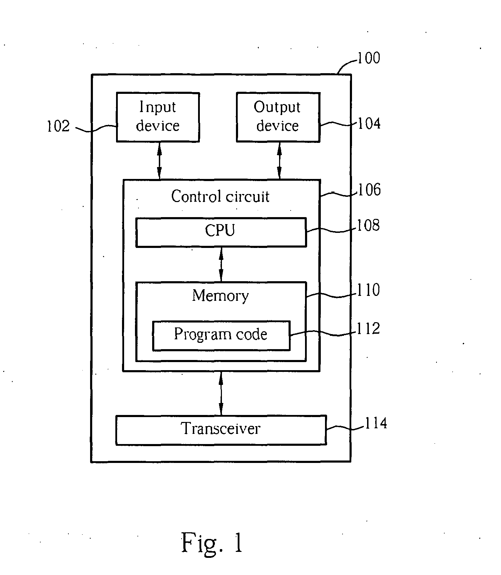

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

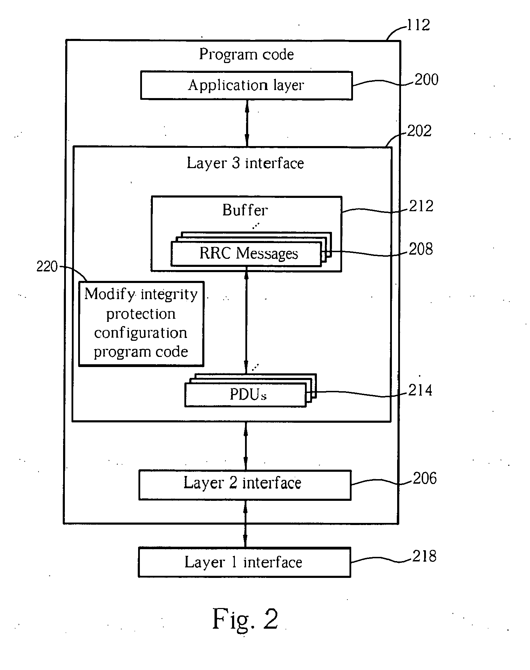

Please continue to refer to Fig. 2. Fig. 2 is a diagram of the program code 112 shown in Fig. 1. The program code 112 comprises an application layer 200, a Layer 3 interface 202, and a Layer 2 interface 206, and is coupled to a Layer 1 interface 218. The Layer 3 interface 202 comprises a buffer 212 for storing an RRC message 208, and for forming an RRC PDU 214 according to the RRC message 208. The application layer 200 provides control signals required by necessary procedures, which can be outputted by attaching the control signals to RRC PDUs 214 for setting, modifying, or releasing the Layer 2 interface 206 and the Layer 1 interface 218, to establish, modify, or cancel data exchange channels.

To prevent a loss of security due to false signaling from unrelated parties and protect message transmission on the SRBs, the Layer 3 interface 202 can start and modify an Integrity Protection Configuration procedure. In this situation, the present invention provides Modify Integrity Protection Configuration program code 220.

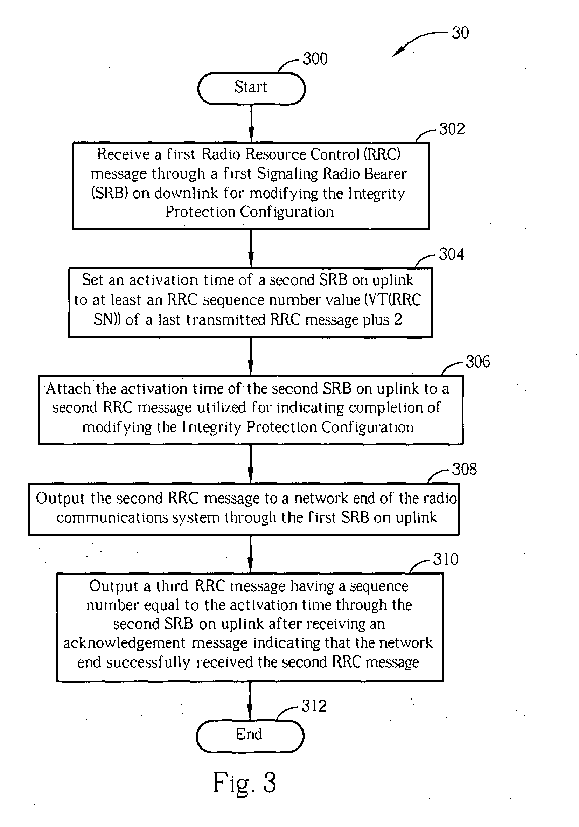

Please refer to Fig. 3, which is a flowchart diagram of a process 30 according to the present invention. The process 30 is used to modify the Integrity Protection Configuration in a user end of the communications system, and can be seen as the Modify Integrity Protection Configuration program code 220. The process 30 comprises the following steps:
- Step 300:: Start.
- Step 302:: Receive a first RRC message, i.e. IP Command, through a first Signaling Radio Bearer (SRB) on downlink for modifying the Integrity Protection Configuration.
- Step 304:: Set an Activation Time of a second SRB on uplink to at least an RRC sequence number value (VT (RRC SN)) of a last transmitted RRC message plus 2. The Activation Time is utilized for activating the second SRB on uplink to use the modified Integrity Protection Configuration.
- Step 306:: Attach the Activation Time of the second SRB on uplink to a second RRC message, i.e. IP Complete, utilized for indicating completion of modifying the Integrity Protection Configuration.
- Step 308:: Output the second RRC message, i.e. the IP Complete message, to a network end of the communications system through the first SRB on uplink.
- Step 310:: Output a third RRC message having a sequence number equal to the Activation Time through the second SRB on uplink after receiving an acknowledgement message indicating that the network end successfully received the second RRC message, i.e. the IP Complete message.
- Step 312:: End.

Thus, according to the process 30, when the user end receives the IP Command message outputted by the network end, if the IP Command message is in Modify Integrity Protection Configuration mode, the user end will modify the Integrity Protection Configuration configuration, and send the IP Complete message, i. e. the second RRC message mentioned above, through SRB2, i.e. the first SRB mentioned above, to the network end. The IP Complete message comprises an Activation Time of the SRB0 on uplink, and the Activation Time is equal to at least the RRC-SN (VT(RRC SN)) of the last RRC message transmitted through the SRB0 on uplink plus 2, preferably VT(RRC SN) + N302 + 2. Then, after receiving an acknowledgement message confirming that the network end has already successfully received the IP Complete message, the user end will set the RRC-SN of the first RRC message (the third RRC message mentioned above) transmitted through the SRB0 (the second SRB mentioned above) on uplink equal to the Activation Time of the SRB0 Uplink, preferably to VT (RRC SN) + N302 + 2. In other words, after completing the Modify Integrity Protection Configuration process, the RRC-SN of the first RRC message transmitted by the user end through the SRB0 on uplink is equal to the SRB0 Uplink Activation Time, and more preferably, to VT (RRC SN) + N302 + 2. In this situation, if the first RRC message transmitted by the SRB0 on uplink is lost after the Modify Integrity Protection Configuration process, the present invention can prevent the RRC message from being discarded unnecessarily, which increases transmission efficiency.

For example, assume that the parameter N302 is set by the network end to 3, and before the Modify Integrity Protection Configuration process is completed, the variable VT(RRC SN) corresponding to the uplink SRB0 is 11. Thus, the SRB0 Uplink Activation Time is equal to VT(RRC SN) + N302 + 2 = 11 + 3 + 2 = 16. Because the RRC-SN is a 4-bit number, it can be seen that the Activation Time of the SRB0 Uplink becomes 0 (16 mod 2⁴). Simultaneously, the user end will attach information indicating that the Activation Time for the SRB0 on uplink is 0 in the IP Complete message sent to the network end, expressing that the user end will begin using new IP configuration on and after the Activation Time of 0 of the uplink SRB0. After the user end has received an acknowledgement confirming that the network end received the IP Complete message, according to the present invention, the first RRC message (that uses the already modified Integrity Protection Configuration) sent by the user end through the SRB0 on uplink will have RRC-SN equal to the Activation Time, i.e. 0, and the RRC-HFN will be increased by 1. If the network end successfully receives the RRC message with RRC-SN = 0, the network end will increase the RRC-HFN by 1, and will use the modified Integrity Protection Configuration when performing the integrity test on the RRC message. Conversely, if the RRC message having RRC-SN = 0 is lost in transmission, the user end will retransmit the RRC message, and increase the RRC-SN of the RRC message by 1 to RRC-SN = 1. If the RRC message with RRC-SN = 1 is lost again during retransmission, because N302 = 3, the user end will retransmit the RRC message again, and increase the RRC-SN of the RRC message again by 1 to RRC-SN = 2. At this time, if the network end successfully receives the RRC message having RRC-SN = 2, because the RRC message is the first RRC message received by the network end on SRB0 after receiving the IP Complete message, and the network end will see the RRC-SN = 2 as coming after the Activation Time of 0 (sequentially speaking), and thus use the new Integrity Protection Configuration to perform the integrity test on the RRC message, and will also increase the RRC-HFN by 1. Of course, as the Integrity Protection Configurations of the network end and the user end are synchronized, and the RRC-HFNs are also synchronized, the RRC message will pass the integrity test, and the RRC procedure corresponding to the RRC message will be able to complete smoothly to maintain system efficiency.

Further, in the present invention, after the user end receives an acknowledgement confirming that the network end has already received the IP Complete message successfully, the RRC-SN of the first RRC message sent through the SRB0 on uplink is equal to the Activation Time. Thus, when determining the RRC-HFN to perform the integrity check, the network end will not make a mistake. For example, assume that the parameter N302 is set by the network end to 3, and before the Modify Integrity Protection Configuration process is completed, the variable VT(RRC SN) corresponding to the SRB0 Uplink is 11. Thus, the SRB0 Uplink Activation Time is equal to VT (RRC SN) + N302 + 2 = 11 + 3 + 2 =16. Because the RRC-SN is a 4-bit number, it can be seen that the Activation Time of the SRB0 Uplink becomes 0 (16 mod 2⁴). Simultaneously, the user end will attach information indicating that the Activation Time for the uplink SRB0 is 0 in the IP Complete message sent to the network end, expressing that the user end will begin using new IP configuration on and after the Activation Time of 0 of the SRB0 on uplink. After the user end has received an acknowledgement confirming that the network end received the IP Complete message successfully, according to the present invention, the RRC-SN of the first RRC message (using the already modified Integrity Protection Configuration) sent through the SRB0 on uplink will equal the Activation Time, i.e. RRC-SN = 0, and the RRC-HFN will be increased from x to x+1. If transmission fails, the user end will retransmit the RRC message, set the RRC-SN to 1, and set the RRC-HFN to x+1. Thus, the network end can quickly and accurately determine the value of the RRC-HFN, such that the RRC-HFNs of the network end and the user end can be synchronized, allowing the integrity check to maintain normal operation.

In the prior art (3GPP TS 25.331 V6.7.0), if the first RRC message transmitted by the SRB0 on uplink after the Modify Integrity Protection Configuration process is lost (e.g., due to radio obstructions), the transmission efficiency will be reduced, and RRC messages may be unnecessarily discarded. In the present invention, on the other hand, after receiving the acknowledgement message confirming that the network end has successfully received the IP Complete message, the RRC-SN of the first RRC message transmitted through the SRB0 on uplink by the user end will be set to equal the SRB0 Uplink Activation Time. In this way, the network end can accurately determine the value of the RRC-HFN, and will not discard RRC messages unnecessarily, thereby reducing system resource waste, and increasing system efficiency.

In summary, the present invention can prevent the unnecessary discarding of RRC messages, thereby increasing the efficiency of use of system resources, and greatly improving over the weaknesses of the prior art.

## Claims

1. A method of modifying Integrity Protection, called IP hereinafter, Configuration in a user end of a communications system comprising:
receiving a first Radio Resource Control, called RRC hereinafter, message through a first Signaling Radio Bearer, called SRB hereinafter, on downlink for modifying the IP Configuration from a first IP configuration to a second IP configuration; (302)
setting an Activation Time of a second SRB on uplink to at least an RRC sequence number value, represented by VT(RRC SN) hereinafter, of a last transmitted RRC message plus 2, wherein the Activation Time is utilized for activating the second SRB on uplink to use the second IP Configuration; (304)
attaching the Activation Time of the second SRB on uplink to a second RRC message utilized for indicating completion of modifying the IP Configuration; (306) and
outputting the second RRC message to a network end of the communications system through the first SRB on uplink; (308)
**characterized by** outputting a third RRC message having a sequence number equal to the Activation Time through the second SRB on uplink after receiving an acknowledgement message indicating that the network end successfully received the second RRC message. (310)

2. A communications device (100) used in a communications system for preventing a Radio Resource Control, called RRC hereinafter, message from being unnecessarily discarded during Integrity Protection, called IP hereinafter, Configuration Modification, the communications device comprising:
a control circuit (106) for realizing functions of the communications device;
a central processing unit (108) for executing a program code (112) to operate the control circuit; and
a memory (110) for storing the program code;
wherein the program code comprises:
receiving a first RRC message through a first Signaling Radio Bearer (SRB) on downlink for modifying the IP Configuration from a first IP configuration to a second IP configuration; (302)
setting an Activation Time of a second SRB on uplink to at least an RRC sequence number value, represented by VT(RRC SN) hereinafter, of a last transmitted RRC message plus 2, wherein the Activation Time is utilized for activating the second SRB on uplink to use the second IP Configuration; (304)
attaching the Activation Time of the second SRB on uplink to a second RRC message utilized for indicating completion of modifying the IP Configuration; (306) and
outputting the second RRC message to a network end of the communications system through the first SRB on uplink; (308)
**characterised by** the program code outputting a third RRC message having a sequence number equal to the Activation Time through the second SRB on uplink after receiving an acknowledgement message indicating that the network end successfully received the second RRC message. (310)

3. The method of claim 1 and the communications device of claim 2, **characterized in that** the first SRB operates in Acknowledged Mode.

4. The method of claim 1 and the communications device of claim 2, **characterized in that** the second SRB on uplink operates in Transparent Mode, and the second SRB on downlink operates in Unacknowledged Mode.

5. The method of claim 1 and the communications device of claim 2, **characterized in that** the Activation Time is greater than or equal to VT(RRC SN) + N302 + 2, VT(RRC SN) represents the sequence number of the last RRC message transmitted by the second SRB on uplink, and N302 represents the maximum number of times for retransmitting an RRC message.

6. The method of claim 1 and the communications device of claim 2, **characterized in that** receiving the first RRC message used for modifying the IP Configuration comprises adopting the second IP Configuration indicated by the first RRC message.

7. The method of claim 1 and the communications device of claim 2, **characterized in that** the third RRC message adopts the second IP Configuration indicated by the first RRC message.

8. The communications device of claim 2 **characterized in that** the communications device is a radio mobile communications device.
